# EUROPÄISCHE PATENTSCHRIFT

(11) **EP 1 421 562 B1**
(45) Veröffentlichungstag und Bekanntmachung des Hinweises auf die Patenterteilung: **25.09.2013**
(21) Anmeldenummer: 02798688.4
(22) Anmeldetag: 29.08.2002
(51) Int. Cl.: G07C 9/00, G07C 5/08, G05B 9/02, B66F 9/06

(54) **FLURFÖRDERFAHRZEUG MIT EINEM ZUGANGSKONTROLLSYSTEM UND VERFAHREN ZUM BETRIEB DES ZUGANGSKONTROLLSYSTEMS**
FLOOR CONVEYOR VEHICLE WITH AN ACCESS CONTROL SYSTEM AND METHOD FOR OPERATING AND ACCESS CONTROL SYSTEM
CHARIOT DE MANUTENTION AVEC UN SYSTEME DE COMMANDE D'ACCES, ET PROCEDE PERMETTANT DE FAIRE FONCTIONNER LE SYSTEME A COMMANDE D'ACCES

(30) Priorität: 31.08.2001 DE 10142704
(43) Veröffentlichungstag der Anmeldung: 26.05.2004
(73) Patentinhaber: Domnick +Müller GMBH & CO. KG, 61381 Friedrichsdorf (DE)
(72) Erfinder: Quirin, Volker, 61381 Friedrichsdorf (DE)
(74) Vertreter: Hebing, Norbert
(86) Internationale Anmeldenummer: PCT/DE2002/003218
(87) Internationale Veröffentlichungsnummer: WO 2003/025863

(56) Entgegenhaltungen:
- EP-A- 0 305 654
- WO-A1-99/17965
- CA-A- 2 227 664
- US-B1- 6 195 605

## Beschreibung

Die Erfindung bezieht sich auf ein Flurförderfahrzeug mit einem Zugangskontrollsystem, das die Inbetriebnahme des Fahrzeuges nur erlaubt, wenn der Bediener sich durch einen ihm individuell zugeordneten elektronisch codierten Schlüssel identifiziert, und den weiteren Merkmalen des Oberbegriffs des Anspruches 1.

Solche Systeme sind bekannt: So sind z. B. Personenkraft-fahrzeuge mit einem Diebstahlsicherungssystem ausgerüstet.

Bei anderen Anwendungen soll es möglich sein, dass mehrere Personen nacheinander Zugang zu dem Fahrzeug erhalten. Dadurch ergeben sich aber verschiedene Probleme: Es lässt sich später häufig nicht mehr feststellen, wer das Fahrzeug unsachgemäß bedient hat und dadurch einen Schaden verursacht hat. Dies gilt insbesondere bei Flurförderfahrzeugen, die bei ruppiger Fahrweise häufig mit Hindernissen (z. B. andere Fahrzeuge, Lagereinrichtungen) kollidieren, wobei erhebliche unfallschäden entstehen können.

Um den verursacher eines Schadens feststellen zu können, und damit die Fahrer, die prinzipiell Zugang zu dem Fahrzeug haben, zu einer vorsichtigen Fahrweise zu veranlassen, ist gemäß der US 6,195,605 vorgesehen, dass das Zugangskontrollsystem eines Fahrzeuges mehrere verschiedene codierte Schlüssel akzeptiert, um somit mehreren Personen nacheinander die Benutzung des Fahrzeuges zu erlauben, und dass das Fahrzeug mit einem Erschütterungssensor und mit einem Speicher versehen ist, in dem Bedienungskenndaten des Fahrzeuges in Bezug zum benutzten Schlüssel aufgezeichnet werden, wobei die vom Erschütterungssensor gelieferten Messwerte im Speicher als Bedienungskenndaten abspeicherbar sind.

Bei dem Erschütterungssensor handelt es sich um ein mechanisch oder elektromechanisch arbeitendes System, das auf Verzögerungen und/oder Beschleunigungen des Fahrzeuges in wenigstens eine Raumrichtung reagiert.

Gemäß der oben genannten US Patentschrift besteht der Erschütterungssensor aus einem Verzögerungssensor. Wenn ausschließlich ein solcher Sensor bei einem Fahrzeug vorgesehen ist, tritt folgendes Problem auf: Wird der spezifische Grenzwert zu niedrig eingestellt, so spricht der Sensor schon dann an, wenn das Fahrzeug stark abgebremst wird; wird der Grenzwert, um dies zu vermeiden, zu hoch eingestellt, so können leichte Kollisionen nicht detektiert werden, bei denen Verzögerungen auftreten, die zwar einer normalen Bremsverzögerung entsprechen, aber trotzdem nur aufwändig zu reparierende Schäden hervorrufen.

In der WO 99/17965 ist ein System beschrieben, das zur Detektion von Fahrzeugkollisionen zwei Sensoren, nämlich einen Beschleunigungssensor und einen Körperschallsensor, verwendet. Dies ermöglicht die Detektion einer Kollision auch, wenn ein Sensor defekt ist. Außerdem kann ein Sensor als sogenannter Safing-Sensor eingesetzt werden, aufgrund dessen Signals festgestellt wird, ob eine Situation vorliegt, die möglicherweise eine Airbagauslösung notwendig macht, wobei aufgrund des Signals des anderen Sensors die tatsächliche Auslösung erfolgt.

Um das oben genannte Problem zu vermeiden, wird vorgeschlagen, dass der Erschütterungssensor aus einem Verzögerungssensor und einem Schallaufnehmer besteht, und wobei ein Kollision sereignis vorliegt, wenn die vom verzögerungssensor gemessane Verzögerung des Fahrzeugs und der vom Schallaufnehmer ermittelte Schallpegel jeweils einen spezifischen Grenzwert übersteigt, wobei jeder Grenzwert für sich genommen noch einen Betriebszustand markiert, der kein schadensauslösendes Kollisionsereignis darstellt.

Der Schallaufnehmer nimmt den bei einer Kollision entstehenden Schall auf, so dass ein zweites Kriterium für das Vorliegen einer Kollision vorliegt.

Der Erschütterungssensor kann als Messgerät ausgelegt sein, das die jeweilige Verzögerung oder Beschleunigung laufend misst, wobei die gemessenen Werte in einer elektronischen Auswerteeinheit ständig mit einem Grenzwert verglichen werden. Wird der entsprechend gewählte Grenzwert überschritten, wird eine unsachgemäße Bedienung festgestellt. Der Sensor kann aber auch als Schalter mit einer auslenkbaren Testmasse ausgelegt sein, die einen Stromkreis schließt (oder öffnet), wenn den Grenzwert überschreitende Beschleunigungen oder Verzögerungen vorliegen. Schalter dieser Art werden z. B. bei Personenkraftwagen eingesetzt, um im Falle einer Kollision zum Schutz der Insassen die Airbags in der Fahrgastzelle auszulösen. Sie reagieren im Allgemeinen aber nur auf Verzögerungen in einer Richtung. Diese Schalter werden als Crashsensoren bezeichnet.

Der Begriff "unsachgemäße Bedienung" soll bei einem Fahrzeug auch eine Kollision mit einem Hindernis oder einem anderen Fahrzeug einschließen: In diesem Sinn kann der Erschütterungssensor auch als Unfalldetektionssensor angesprochen werden.

Bei den Bedienungskenndaten handelt es sich vornehmlich um die Zugangszeit (Uhrzeit, Datum) und die Ausgangszeit (Uhrzeit, Datum). Somit kann jedem Schlüssel und damit jedem Bediener bzw. Fahrer eine Nutzungszeit zugeordnet werden. Prinzipiell können aber auch andere Daten gespeichert werden, wie z. B. bestimmte Schaltvorgänge oder bei einem Fahrzeug die Geschwindigkeit. Dies lässt Schlüsse auf die Qualität zu, mit der das Fahrzeug bedient wird.

Die bisherig dargestellte Ausrüstung des Systems erlaubt es, den Fahrer, der einen Schaden verursacht hat, anhand der nachträglich ausgelesenen und zuvor gespeicherten Daten festzustellen. Um eine sofortige Klärung der Kollisionsumstände zu ermöglichen und um ggf. Hilfe leisten zu können, ist dazu das Zugangskontrollsystem so ausgelegt, dass es, wenn der Erschütterungssensor eine Kollision anzeigt, das Fahrzeug automatisch zumindest teilweise abschaltet und die Zugangsberechtigung zumindest für den zur zeit der Kollision aktiven Schlüssel und ggf. für weitere Schlüssel sperrt.

Eine vollständige Stilllegung würde auf jeden Fall eine sofortige Klärung der Kollisionsumstände erzwingen und somit eine nachträgliche Vertuschung der Unfallumstände erschweren. Da es aber unter Umständen notwendig ist, das Fahrzeug aus einem Gefahrenbereich zu bringen, kann die Abschaltung auch nur teilweise erfolgen, so dass z. B. eine zeitlich begrenzte und/oder geschwindigkeitsreduzierte Bedienung möglich bleibt.

Um das Fahrzeug nach Klärung der Umstände wieder in Betrieb nehmen zu können, ist vorgesehen, dass die codierten Schlüssel zu einem Schließsystem gehören, das wenigstens einen Masterschlüssel aufweist, mit dem das Zugangskontrollsystem veranlasst werden kann, eine erneute Inbetriebnahme des Fahrzeuges nach einer automatischen Abschaltung vorzunehmen. Der Masterschlüssel wird dabei einer Person zugeordnet, die befugt ist die Kollisionsumstände zu klären und zu bewerten. Außerdem kann autorisiert durch den Masterschlüssel eine Wiederfreischaltung der gesperrten Schlüssel erfolgen.

Die Freischaltung kann aber auch durch eine Fernsteuerung initiiert werden. Dazu ist vorgesehen, dass das Fahrzeug einen Funkempfänger aufweist, mit dem dem Zugangskontrollsystem Freischaltsignale von einer von dem Fahrzeug räumlich entfernten Kontrollzentrale übermittelbar sind, um das Zugangskontrollsystem zu veranlassen, eine erneute Inbetriebnahme des Fahrzeuges nach einer automatischen Abschaltung vorzunehmen.

Außerdem kann das Fahrzeug einen Funksender aufweisen, mit dem der räumlich entfernten Kontrollzentrale die Daten aus dem Speicher - zumindest aber die Werte des Erschütterungssensors - zuleitbar sind, so dass dort eine Kollision sofort bemerkt wird.

Als elektronisch codierte Schlüssel haben sich insbesondere Transponder bewährt, die von einem entsprechenden Lesegerät an dem Fahrzeug gelesen werden. Ein Transponder ist ein elektronischer Datenspeicher, der berührungslos gelesen werden kann. Kernstück eines Transponders ist ein Mikrochip, welcher die Kommunikation mit einem Lesegerät ermöglicht. Dazu baut das Lesegerät ein elektromagnetisches Feld auf, das den Transponder über eine integrierte Antennenspule mit Energie versorgt. Der Datenaustausch erfolgt durch Modulation dieses elektromagnetischen Feldes. Der im Transponder gespeicherte Code wird mit den Codes verglichen, die im elektronischen Speicher des Zugangskontrollsystems gespeichert sind.

Um eine nachträgliche Montage des Zugangskontrollsystems zu vereinfachen, sind alle bisher genannten Komponenten, nämlich das Lesegerät, der Speicher und der Erschütterungssensor in einem Gehäuse untergebracht, das an dem Fahrzeug befestigt wird. Es enthält weiterhin ein Relais, das in den Hauptstromkreis des Fahrzeuges eingeschaltet wird.

Das Flurförderfahrzeug, kann mit einem Ortungssystem (GPS-Modul) versehen werden, das ggf. ebenfalls in dem Gehäuse untergebracht wird.

Wie schon weiter oben erläutert ist, besteht der Erschütterungssensor wenigstens aus einem Verzögerungssensor. Wenn nur ein solcher Sensor bei einem Fahrzeug vorgesehen ist, tritt folgendes Problem auf: Wird der spezifische Grenzwert zu niedrig eingestellt, so spricht der Sensor schon dann an, wenn das Fahrzeug stark abgebremst wird; wird der Grenzwert, um dies zu vermeiden, zu hoch eingestellt, so können leichte Kollisionen bei den Verzögerungen auftreten, die zwar einer normalen Bremsverzögerung entsprechen, aber trotzdem nur aufwändig zu reparierende Schäden hervorrufen, nicht detektiert werden.

Um dieses Problem zu vermeiden, wird gemäß der Erfindung vorgeschlagen, dass der Erschütterungssensor aus einem Verzögerungssensor und einem Schallaufnehmer besteht, der den bei einer Kollision entstehenden Schall aufnimmt, so dass ein zweites Kriterium für das Vorliegen einer Kollision vorliegt.

Um sowohl Frontal- als auch Seitenkollisionen erfassen zu können, weist der Verzögerungssensor eine Testmasse auf, die gegen eine Rückstellkraft in alle Richtungen einer Ebene bewegbar ist.

Bei dem Schallaufnehmer handelt es sich vorzugsweise um einen Körperschallsensor.

Die Erfindung bezieht sich weiterhin auf ein Verfahren zum Betrieb des Zugangskontrollsystems zu einem Flurförderfahrzeug, welches erst nach Autorisierung durch das Zugangskontrollsystem in Betrieb genommen werden kann, wobei das Flurförderfahrzeug mit einem Erschütterungssensor versehen ist und wobei das Zugangskontrollsystem das Fahrzeug vollständig, zumindest aber teilweise außer Betrieb setzt, wenn der Erschütterungssensor Werte liefert, die auf eine Kollisionsereignis hinweisen.

Gemäß der Erfindung können Fehlabschaltungen vermieden werden, da der Erschütterungssensor aus einem Verzögerungssensor und einem Schallaufnehmer besteht, wobei eine Kollisionsereignis angezeigt wird, wenn die vom Verzögerungssensor gemessene Verzögerung des Fahrzeuges und der vom Schallaufnehmer ermittelte Schallpegel jeweils einen spezifischen Grenzwert übersteigt, wobei jeder Grenzwert für sich genommen noch einen Betriebszustand markiert, der kein schadensauslösendes Kollisionsereignis darstellt.

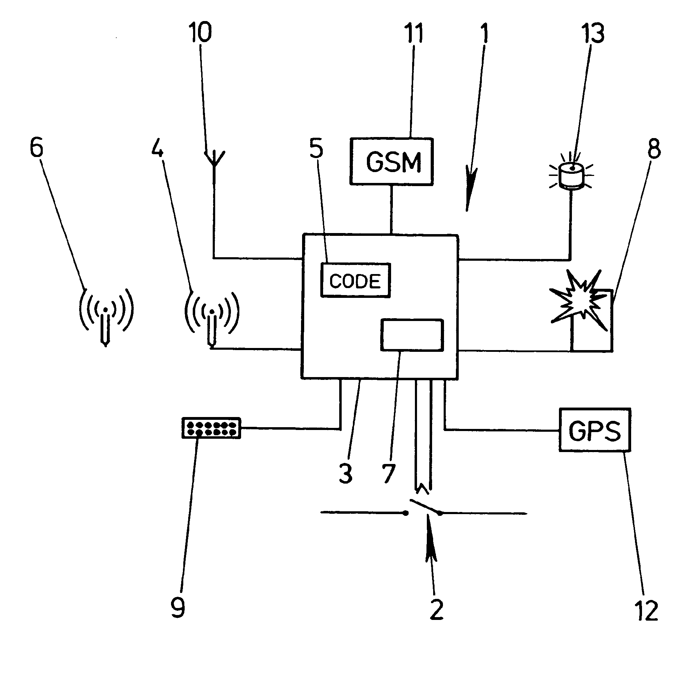

Im Folgenden soll die Erfindung anhand eines Ausführungsbeispiels näher erläutert werden. Dazu zeigt die einzige Figur eine schematische Darstellung des Zugangskontrollsystems:

Das Zugangskontrollsystem 1 ist in einem hier nicht näher dargestellten Gehäuse untergebracht, das an einen Flurförderfahrzeug befestigt wird.

Es besitzt ein Relais 2, das in einem Stromkreis des Fahrzeuges eingesetzt ist, so dass dieses nur in Betrieb gesetzt werden kann, wenn das Relais 2 geschlossen ist.

Das Relais 2 wird von einer elektronischen Auswerteeinheit 3 betätigt, die mit einem Transponderlesegerät 4 verbunden ist und einen ersten Speicher 5 aufweist, in dem die Zugangscodes abgelegt sind, mit denen der Zugang zu dem Fahrzeug erlaubt ist, das heißt, das Fahrzeug in Gang gesetzt werden kann. Um das Fahrzeug freizuschalten, übermittelt ein Fahrer seinen individuellen Zugangscode mittels eines ihm zugeordneten Transponders 6 an die Auswerteeinheit 3, die den übermittelten Zugangscode mit den im ersten Speicher 5 abgelegten Codes vergleicht: Liegt eine Übereinstimmung vor, wird das Relais 2 geöffnet und der Zugangscode als aktiv angesehen.

Gleichzeitig wird die Zugangszeit in einem zweiten Speicher 7 registriert und dem aktiven Zugangscode zugeordnet. Zum Deaktivieren lässt der Fahrer seinen Transponder 6 ein zweites Mal auslesen: Die Ausgangszeit wird registriert und dem bis dahin aktiven Code zugeordnet.

Das Zugangskontrollsystem ist mit einem Erschütterungssensor, auch Unfalldetektionssensor 8 genannt, verbunden.

Wird das Fahrzeug in einem Unfall verwickelt, bei dem der Unfalldetektionssensor 8 anspricht, wird dies zunächst im zweiten Speicher 7 registriert und das Ereignis dem zur Zeit aktiven Code zugeordnet.

Des Weiteren wird das Relais 2 geöffnet, so dass das Fahrzeug stillgelegt wird.

Zur Kommunikation mit der Auswerteeinheit 3 ist eine PC-Schnittstelle 9 sowie eine Funkanlage 10 vorgesehen. Dabei kann es sich auch um ein Funksystem 11 nach dem GSM-/UMTS-Standard handeln.

Über die Funkverbindung kann der zweite Speicher 7 laufend ausgelesen werden.

Das Fahrzeug kann, wenn es nach einem Unfall abgeschaltet worden ist, über die Funkverbindung oder mittels eines Mastertransponders wieder freigeschaltet werden.

Optional ist ein GPS-Modul 12 zum Orten des Fahrzeuges sowie eine Warnleuchte 13 vorgesehen, die eingeschaltet wird, wenn ein Unfall registriert worden ist.

Der Erschütterungssensor besteht aus einem Verzögerungssensor und einem Körperschallaufnehmer. Der Verzögerungssensor weist eine Testmasse auf, die ein- oder beidseitig jeweils an einem vertikal verlaufenden Faden aus Federstahl in einem Sensorgehäuse befestigt ist und somit in alle Richtungen einer horizontalen Ebene schwingend ausgelenkt werden kann, wobei die Rückstellkraft durch die Elastizität des Federstahles bewirkt wird. In der horizontalen Schwingebene befindet sich ein die Testmasse radial umgebender Ring. Wenn die Verzögerung (Beschleunigung) des Fahrzeuges in der Horizontalebene einen Grenzwert, der von physikalischen Daten des Sensors bestimmt ist, übersteigt, wird die Testmasse bis zum Ring ausgelenkt und ein Stromkreis über den Ring, die Testmasse und wenigstens einen der Fäden geschlossen.

Der Schallaufnehmer ist ein Körperschallsensor, der mit der Karosserie des Fahrzeuges Kontakt hat.

Ein Außerbetriebsetzen des Fahrzeuges erfolgt nur dann, wenn sowohl der Verzögerungssensor anspricht, also der Verzögerungsgrenzwert überschritten wird, als auch der vom Schallaufnehmer festgestellte Körperschall einen bestimmten Schallpegel überschreitet. Die beiden Grenzwerte können dabei so festgelegt werden, dass sie für sich genommen auch beim normalen Betrieb auftreten: (a) Wird z. B. das Fahrzeug stark abgebremst, spricht zwar der Verzögerungssensor an, nicht aber der Körperschallsensor. (b) Beim Beladen können Gegenstände gegen gegen Beschädigungen geschützte Karosseriebereiche schlagen, wodurch zwar ein relativ großer Körperschall induziert, aber das Fahrzeug als Ganzes nicht verzögert wird, dies lässt den Körperschallsensor ansprechen, aber nicht den Verzögerungssensor. In den beiden genannten Fällen kommt es daher nicht zu einer Fehlabschaltung des Fahrzeuges.

Da Verzögerungs- und Körperschallsensoren der genannten Art bekannt sind, sind sie nicht im Einzelnen dargestellt.

### Bezugszeichenliste

- 1: Zugangskontrollsystem
- 2: Relais
- 3: Auswerteeinheit
- 4: Transponderlesegerät
- 5: Speicher

- 6: Transponder
- 7: Speicher
- 8: Unfalldetektionssensor (Erschütterungssensor)
- 9: PC-Schnittstelle
- 10: Funkanlage (Funksender/Funkempfänger)

- 11: Funksystem
- 12: GPS-Modul (Ortungssystem)
- 13: Warnleuchte

## Patentansprüche

1. Flurförderfahrzeug mit einem Zugangskontrollsystem, das die Inbetriebnahme des Fahrzeuges nur erlaubt, wenn der Bediener sich durch einen ihm individuell zugeordneten elektronisch codierten Schlüssel identifiziert, wobei das Zugangskontrollsystem eines Fahrzeuges mehrere verschiedene codierte Schlüssel akzeptiert, um somit mehreren Personen nacheinander die Benutzung des Fahrzeuges zu erlauben, und dass das Fahrzeug mit einem Erschütterungssensor (8) und mit einem Speicher (7) versehen ist, in dem Bedienungskenndaten des Fahrzeuges in Bezug zum benutzten Schlüssel aufgezeichnet werden, wobei die vom Erschütterungssensor (8) gelieferten Messwerte im Speicher (7) als Bedienungskenndaten abspeicherbar sind, wobei der Speicher (7) so eingerichtet ist, dass darin ein Kollisionsereignis, bei dem der Erschütterungssensor (8) anspricht, registriert wird und dem zur Zeit aktiven Schlüssel zugeordnet wird und wobei das Zugangskontrollsystem so ausgelegt ist, dass es, wenn der Erschütterungssensor ein Kollisionsereignis anzeigt, das Fahrzeug automatisch zumindest teilweise abschaltet und die Zugangsberechtigung zumindest für den zur Zeit der Kollision aktiven Schlüssel und ggf. für weitere Schlüssel sperrt,
**dadurch gekennzeichnet,**
**dass** der Erschütterungssensor aus einem Verzögerungssensor und einem Schallaufnehmer besteht, wobei ein Kollisionsereignis vorliegt, wenn die vom Verzögerungssensor gemessene Verzögerung des Fahrzeugs und der vom Schallaufnehmer ermittelte Schallpegel jeweils einen spezifischen Grenzwert übersteigt, wobei jeder Grenzwert für sich genommen noch einen Betriebszustand markiert, der kein schadensauslösendes Kollisionsereignis darstellt.

2. Flurförderfahrzeug nach Anspruch 1, **dadurch gekennzeichnet, dass** die codierten Schlüssel zu einem Schließsystem gehören, das wenigstens einen Masterschlüssel aufweist, mit dem das Zugangskontrollsystem veranlasst werden kann, eine erneute Inbetriebnahme des Fahrzeuges nach einer automatischen Abschaltung vorzunehmen.

3. Flurförderfahrzeug nach Anspruch 1, **dadurch gekennzeichnet, dass** das Fahrzeug einen Funkempfänger (10) aufweist, mit dem dem Zugangskontrollsystem Freischaltsignale von einer von dem Fahrzeug räumlich entfernten Kontrollzentrale übermittelbar sind, um das Zugangskontrollsystem zu veranlassen, eine erneute Inbetriebnahme des Fahrzeuges nach einer automatischen Abschaltung vorzunehmen.

4. Flurförderfahrzeug nach Anspruch 3, **dadurch gekennzeichnet, dass** das Fahrzeug einen Funksender (10) aufweist, mit dem der räumlich entfernten Kontrollzentrale zumindest die Messwerte des Erschütterungssensors zuleitbar sind.

5. Flurförderfahrzeug nach einem der vorhergehenden Ansprüche, **dadurch gekennzeichnet, dass** der Schlüssel ein Transponder (6) ist, der von einem entsprechenden Lesegerät (4) an dem Fahrzeug lesbar ist.

6. Flurförderfahrzeug nach einem der vorhergehenden Ansprüche, **dadurch gekennzeichnet, dass** das Lesegerät (4), der Speicher (7) und der Erschütterungssensor (8) in einem Gehäuse untergebracht sind, das an dem Fahrzeug befestigt ist.

7. Flurförderfahrzeug nach Anspruch 1, **dadurch gekennzeichnet, dass** es mit einem Ortungssystem (12) versehen ist.

8. Flurförderfahrzeug nach Anspruch 1, **dadurch gekennzeichnet, dass** der Erschütterungssensor eine Testmasse aufweist, die gegen eine Rückstellkraft in alle Richtungen einer Ebene bewegbar ist.

9. Flurförderfahrzeug nach Anspruch 1 oder 8, **dadurch gekennzeichnet, dass** der Schallaufnehmer ein Körperschallsensor ist.

10. Verfahren zum Betrieb eines Zugangskontrollsystems zu einem Flurförderfahrzeug, welches erst nach Autorisierung durch das Zugangskontrollsystem in Betrieb genommen werden kann, wobei das Flurförderfahrzeug mit einem Erschütterungssensor versehen ist und wobei das Zugangskontrollsystem das Flurförderfahrzeug vollständig, zumindest aber teilweise außer Betrieb setzt, wenn der Erschütterungssensor Werte liefert, die auf ein Kollisionsereignis hinweisen,
**dadurch gekennzeichnet,**
**dass** der Erschütterungssensor aus einem Verzögerungssensor und einem Schallaufnehmer besteht, wobei ein Kollisionsereignis angezeigt wird, wenn die vom Verzögerungssensor gemessene Verzögerung des Fahrzeugs und der vom Schallaufnehmer ermittelte Schallpegel jeweils einen spezifischen Grenzwert übersteigt, wobei jeder Grenzwert für sich genommen noch einen Betriebszustand markiert, der kein schadensauslösendes Kollisionsereignis darstellt.

## Claims

1. An industrial truck with an access control system, which only permits starting-up of the vehicle when the operator has identified himself through an electronically encoded key individually assigned to him, wherein the access control system of a vehicle accepts a plurality of different encoded keys so as to allow a plurality of persons in succession to use the vehicle, and that the vehicle is provided with a shock sensor (8) and with a memory (7), in which the operating characteristics of the vehicle with respect to the key used are recorded, wherein the measured values supplied by the shock sensor (8) can be stored in the memory (7) as operating characteristics, wherein the memory (7) is equipped so that therein a collision event, upon which the shock sensor (8) responds, is registered and assigned to the currently active key and wherein the access control system is designed so that when the shock sensor indicates a collision event, it automatically switches off the vehicle at least partially and blocks the access authorisation at least for the key that is active at the time of the collision and if appropriate for further keys,
**characterized in that**
the shock sensor consists of a deceleration sensor and a sound sensor, wherein a collision event is present when the deceleration of the vehicle measured by the deceleration sensor and the sound level determined by the sound sensor each exceed a specific limit value, wherein each limit value taken on its own still marks an operating state which does not constitute a damage-triggering collision event.

2. The industrial truck according to Claim 1, **characterized in that** the encoded keys belong to a locking system, which comprises at least one master key with which the access control system can be prompted to carry out a renewed start-up of the vehicle following an automatic shutdown.

3. The industrial truck according to Claim 1, **characterized in that** the vehicle comprises a radio receiver (10), with which activation signals can be transmitted to the access control system from a control centre that is spatially distant from the vehicle in order to prompt the access control system to carry out a renewed start-up of the vehicle following an automatic shutdown.

4. The industrial truck according to Claim 3, **characterized in that** the vehicle comprises a radio transmitter (10) with which at least the measured values of the shock sensor can be channelled to the spatially distant control centre.

5. The industrial truck according to any one of the preceding Claims, **characterized in that** the key is a transponder (6), which can be read by a suitable reading device (4) on the vehicle.

6. The industrial truck according to any one of the preceding Claims, **characterized in that** the reading device (4), the memory (7) and the shock sensor (8) are accommodated in a housing which is fastened to the vehicle.

7. The industrial truck according to Claim 1, **characterized in that** it is provided with a positioning system (12).

8. The industrial truck according to Claim 1, **characterized in that** the shock sensor comprises a test mass, which is moveable against a resetting force in all directions of a plane.

9. The industrial truck according to Claim 1 or 8, **characterized in that** the sound sensor is a structure-borne sound sensor.

10. A method for operating an access control system to an industrial truck, which can be started up only following authorisation by the access control system, wherein the industrial truck is provided with a shock sensor and wherein the access control system completely, but at least partially shuts down the industrial truck when the shock sensor supplies values which indicate a collision event, **characterized in that** the shock sensor consists of a deceleration sensor and a sound sensor, wherein a collision event is indicated when the deceleration of the vehicle measured by the deceleration sensor and the sound level determined by the sound sensor each exceed a specific limit value, wherein each limit value on its own still marks an operating state which does not constitute a damage-triggering collision event.

## Revendications

1. Chariot de manutention avec système de contrôle d'accès, qui permet la mise en service du véhicule seulement quand l'opérateur s'identifie au moyen d'une clé codée électronique qui lui est affectée individuellement, dans lequel le système de contrôle d'accès d'un véhicule accepte plusieurs clés codées différentes et permet ainsi à plusieurs personnes successives l'utilisation du véhicule, et en ce que le véhicule est pourvu d'un capteur de secousses (8) et d'une mémoire (7), dans laquelle des données caractéristiques de commande du véhicule sont enregistrées par rapport à la clé utilisée, dans lequel les valeurs de mesures délivrées par le capteur de secousses (8) peuvent être mémorisées dans la mémoire (7) comme données caractéristiques de commande, dans lequel la mémoire (7) est conçue de telle sorte qu'un incident de collision, auquel le capteur de secousses (8) réagit, y soit enregistré et soit coordonné à la clé active à ce moment et dans lequel le système de contrôle d'accès est conçu de telle sorte, lorsque le capteur de secousses affiche un incident de collision, qu'il déconnecte automatiquement au moins partiellement le véhicule et bloque l'autorisation d'accès au moins pour le clé active au moment de la collision et le cas échéant pour d'autres clés, **caractérisé en ce que** le capteur de secousses est constitué d'un capteur de retard et d'un capteur acoustique, dans lequel un incident de collision est présent, quand le retard du véhicule mesuré par le capteur de retard et le niveau sonore déterminé par le capteur acoustique dépasse respectivement une valeur limite spécifique, dans lequel chaque valeur limite marque en soi un état de fonctionnement, qui ne constitue pas un évènement de collision déclenchant un dommage.

2. Chariot de manutention selon la revendication 1, **caractérisé en ce que** les clés codées appartiennent à un système de fermeture, qui présente au moins une clé maître, avec laquelle le système de contrôle d'accès peut être quitté, afin d'entreprendre une nouvelle mise en service du véhicule après une déconnexion automatique.

3. Chariot de manutention selon la revendication 1, **caractérisé en ce que** le véhicule présente un récepteur radio (10), avec lequel des signaux d'activation peuvent être transmis au système de contrôle d'accès à partir d'une centrale de contrôle qui est spatialement éloignée du véhicule, afin de quitter le système de contrôle d'accès et d'entreprendre une nouvelle mise en service du véhicule après une déconnexion automatique.

4. Chariot de manutention selon la revendication 3, **caractérisé en ce que** le véhicule présente un émetteur radio (10), avec lequel les valeurs de mesure du capteur de secousses peuvent être émises vers la centrale de contrôle spatialement éloignée.

5. Chariot de manutention selon une des revendications précédentes, **caractérisé en ce que** la clé est un transpondeur (6), qui peut être lu par un appareil de lecture correspondant (4) sur le véhicule.

6. Chariot de manutention selon une des revendications précédentes, **caractérisé en ce que** l'appareil de lecture (4), la mémoire (7) et le capteur de secousses (8) sont renfermés dans un boîtier, qui est fixé sur le véhicule.

7. Chariot de manutention selon la revendication 1, **caractérisé en ce qu'**il est pourvu d'un système de localisation (12).

8. Chariot de manutention selon la revendication 1, **caractérisé en ce que** le capteur de secousses présente une masse de test, qui peut déplacée en sens inverse à une force de rappel élastique dans toutes les directions d'un plan.

9. Chariot de manutention selon les revendications 1 ou 8, **caractérisé en ce que** le capteur acoustique est un capteur de bruit structurel.

10. Procédé permettant de faire fonctionner le système de contrôle d'accès à un chariot de manutention, qui peut être mis en fonctionnement seulement après autorisation par le système de contrôle d'accès, dans lequel le chariot de manutention est pourvu d'un capteur de secousses et dans lequel le système de contrôle d'accès mis hors service le chariot de manutention en totalité, mais au moins partiellement quand le capteur de secousses délivre des valeurs, qui indiquent un incident de collision, **caractérisé en ce que** le capteur de secousses est constitué d'un capteur de retard et un capteur acoustique, dans lequel un incident de collision est affiché, quand le retard du véhicule mesuré par le capteur de retard et le niveau sonore déterminé par le capteur acoustique dépassent respective une valeur limite spécifique, dans lequel chaque valeur limite en soi marque un état de fonctionnement, qui ne constitue pas un événement de collision déclenchant un dommage.
